(19) Europäisches Patentamt
European Patent Office
Office européen des brevets

(11) **EP 4 607 972 A1**

(12) **EUROPEAN PATENT APPLICATION**
published in accordance with Art. 153(4) EPC

(43) Date of publication:
**27.08.2025 Bulletin 2025/35**

(21) Application number: **23937287.3**

(22) Date of filing: **30.11.2023**

(51) International Patent Classification (IPC):
*H04W 4/029* (2018.01)

(86) International application number:
**PCT/CN2023/135428**

(87) International publication number:
**WO 2024/234616 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.05.2023 CN 202310556921**

(71) Applicant: **Casco Signal Ltd.**
**Shanghai 200072 (CN)**

(72) Inventors:
- **MA, Yuxin**
**Shanghai 200072 (CN)**
- **SU, Afeng**
**Shanghai 200072 (CN)**
- **JI, Qinghua**
**Shanghai 200072 (CN)**
- **YE, Yunlong**
**Shanghai 200072 (CN)**
- **ZHANG, Yiyuan**
**Shanghai 200072 (CN)**
- **HAN, Yi**
**Shanghai 200072 (CN)**
- **ZHU, Linxian**
**Shanghai 200072 (CN)**
- **LIU, Luohui**
**Shanghai 200072 (CN)**

(74) Representative: **Sanger, Phillip Simon**
**GWIP Ltd t/a Grey Wolf IP**
**1 Mill Street**
**Leamington Spa, Warwickshire CV31 1ES (GB)**

(54) **UNMANNED AERIAL VEHICLE INTERFERENCE SOURCE LOCATING METHOD AND SYSTEM BASED ON INTERFERENCE VECTOR AND PHYSICAL FEATURES**

(57)    Disclosed in the present invention is an unmanned aerial vehicle interference source positioning method and system based on interference vectors and physical characteristics. The method includes: acquiring physical characteristics of interference sources that are collected by an unmanned aerial vehicle, performing several positioning operations on the interference sources based on the physical characteristics of the interference sources, and establishing a vector positioning model to determine actual positions of the interference sources. According to the present invention, the computational load of a flight control system of the unmanned aerial vehicle is reduced by performing calculations at a ground portion through a communication connection between the ground portion and the unmanned aerial vehicle; ineffective calculations are reduced during the interference troubleshooting process by importing an interference whitelist; a vector positioning model is used to position the interference sources, thereby making the positioning more accurate; and in addition to using the GNSS for positioning, photos of the interference sources and videos of environments around the interference sources are used to reduce the difficulty of later on-site processing for interference source positioning.

EP 4 607 972 A1

Fig. 1

**Description**

**TECHNICAL FIELD**

The present invention relates to the field of rail transit technology, specifically to an unmanned aerial vehicle interference source positioning method and system based on interference vectors and physical characteristics.

**BACKGROUND**

Urban rail transit often adopts a communication-based train control system (CBTC) as a train operation control system, which has the characteristic of using communication media to achieve bidirectional communication between trains and ground equipment. Its notable advantages include enabling bidirectional communication between trains and ground equipment and having large data transmission capacity and fast transmission speed, etc.

The communication between the trains and ground equipment in the CBTC system consists of wireless communication from the trains to the trackside and wired communication from the trackside to a control room. The smooth and secure wireless communication between the trains and the ground equipment is an important part of ensuring the normal operation of the entire CBTC system. Currently, wireless communication between the trains and the ground equipment is established by terminals accessing wireless networks via WiFi or LTE networks. The rail industry uses the LTE network operating in the 1.8 GHz communication frequency band, which is a dedicated network frequency band that can also be used by airports, ports, and other industries. However, excessive coverage range can cause interference with the rail operating environment. WiFi networks use the 2.4 GHz communication frequency band, which is part of the 2.4 GHz industry science medicine (ISM) band, a globally open and commonly used wireless frequency band, which is the globally open and commonly used ISM (Industry, Science, Medicine) band. Private radio communication devices, industrial equipment, broadcasting, and high-power radio devices can all interfere with the rail operating environment. These situations can all affect the normal communication of the rail transit control system and may pose a potential threat to people's property safety to some extent.

Due to the wide distribution area of various wireless communication interference sources, the interference sources cannot be precisely positioned in the prior art, making it impossible to eliminate potential safety hazards.

**DISCLOSURE OF THE INVENTION**

An objective of the present invention is to provide an unmanned aerial vehicle interference source positioning method and system based on interference vectors and physical characteristics, aiming to solve the problem that due to the large distribution area of various wireless communication interference sources, the interference sources cannot be precisely positioned in the prior art, making it impossible to eliminate potential safety hazards.

To achieve the above objective, the present invention is implemented by the technical solution below:

In one aspect, the present invention provides an unmanned aerial vehicle interference source positioning method based on interference vectors and physical characteristics, comprising:

acquiring, by a ground control center, physical characteristics of interference sources that are collected by an unmanned aerial vehicle; performing several positioning operations on the interference sources based on the physical characteristics of the interference sources; and establishing a vector positioning model to determine actual positions of the interference sources.

Preferably, the acquiring physical characteristics of interference sources that are collected by an unmanned aerial vehicle specifically comprises:

establishing a communication connection between the unmanned aerial vehicle and the ground control center, acquiring, by the ground control center, the physical characteristics of the interference sources that are collected by the unmanned aerial vehicle, and controlling the flight of the unmanned aerial vehicle.

Preferably, the acquiring, by the ground control center, the physical characteristics of the interference sources that are collected by the unmanned aerial vehicle and controlling the flight of the unmanned aerial vehicle specifically comprises:

transmitting, by the ground control center, physical addresses of an interference whitelist to the unmanned aerial vehicle;

defining, by the ground control center, a monitoring point;

controlling, by the ground control center, the unmanned aerial vehicle to fly to the monitoring point; and

after the unmanned aerial vehicle arrives at the monitoring point, scanning and parsing physical addresses of wireless access points to obtain parsed physical addresses of the wireless access points, and removing the physical addresses of the interference whitelist from the parsed physical addresses of the wireless access points to obtain a physical address table.

Preferably, the acquiring, by the ground control center, the physical characteristics of the interference sources that are collected by the unmanned aerial vehicle further comprises:
obtaining the physical characteristics of the interference sources based on the physical address table, and transmitting, by the unmanned aerial vehicle, the physical characteristics of the interference sources to the ground control center.

Preferably, the obtaining the physical characteristics of the interference sources based on the physical address table specifically comprises:
rotating a horizontal turntable and a vertical turntable for an onboard antenna of the unmanned aerial vehicle to predetermined angles, respectively, recording the horizontal intensity and the vertical intensity of the interference sources corresponding to each physical address in the physical address table, and repeating the rotation of the horizontal turntable and the vertical turntable to next predetermined angles until the traversal of different horizontal angles and vertical angles is completed.

Preferably, the unmanned aerial vehicle transmits the recorded horizontal intensity and vertical intensity of the interference sources and positioning information from a global navigation satellite system (GNSS) of the unmanned aerial vehicle to the ground control center.

Preferably, the performing several positioning operations on the interference sources specifically comprises:
defining, by the ground control center, several different monitoring points, controlling, by the ground control center, the unmanned aerial vehicle to fly to different monitoring points, and recording, by the unmanned aerial vehicle, the physical characteristics of the interference sources at each monitoring point.

Preferably, the performing several positioning operations on the interference sources and establishing a vector positioning model specifically comprises:
establishing, by the ground control center, a vector positioning model, calculating the variation in the physical characteristics of the interference sources at different monitoring points based on the vector positioning model, and determining the magnitudes of the variation relative to a predetermined threshold.

Preferably, the determining the magnitudes of the variation relative to a predetermined threshold specifically comprises:

when the variation exceeds the predetermined threshold, calculating and generating, by the ground control center, a new monitoring point, controlling the unmanned aerial vehicle to fly to the new monitoring point, and re-recording the physical characteristics of the interference sources at the new monitoring point; and

when the variation does not exceed the predetermined threshold, controlling, by the ground control center, the unmanned aerial vehicle to take photos and videos to obtain corresponding photos and videos.

Preferably, the method further comprises: transmitting, by the unmanned aerial vehicle, the photos and the videos to the ground control center to complete the positioning of the actual positions of the interference sources.

In another aspect, the present invention further provides an unmanned aerial vehicle interference source positioning system based on interference vectors and physical characteristics, comprising a ground portion and an unmanned aerial vehicle onboard portion;
the ground portion is in communication connection with the unmanned aerial vehicle onboard portion, and the ground portion and the unmanned aerial vehicle onboard portion perform the unmanned aerial vehicle interference source positioning method based on interference vectors and physical characteristics to determine the actual positions of the interference sources.

Preferably, the ground portion is a ground control center, which controls the flight of the unmanned aerial vehicle onboard portion, acquires data transmitted by the unmanned aerial vehicle onboard portion and processes the data transmitted by the unmanned aerial vehicle onboard portion.

Preferably, the unmanned aerial vehicle onboard portion acquires interference information from the interference sources and transmits the interference information to the ground control center.

The present invention at least has the following technical effects:

(1) The unmanned aerial vehicle interference source positioning method and system based on interference vectors and physical characteristics provided by the present invention, through a communication connection between the ground portion and the unmanned aerial vehicle, performs calculations at the ground portion to reduce the computational load of a flight control system of the unmanned aerial vehicle.

(2) The present invention reduces ineffective calculations in the interference investigation process by introducing an interference whitelist.

(3) The present invention uses a vector positioning model to position the interference sources, making the positioning more precise.

(4) In addition to using the GNSS for positioning, the present invention also uses photos of the interference sources and videos of environments around the interference sources to reduce the difficulty of later on-site processing for interference source positioning.

## BRIEF DESCRIPTION OF THE DRAWINGS

FIG. 1 is a flow chart of an unmanned aerial vehicle interference source positioning method based on interference vectors and physical characteristics according to an embodiment of the present invention; and

FIG. 2 is a diagram of a vector positioning generation manner of an unmanned aerial vehicle interference source positioning method based on interference vectors and physical characteristics according to an embodiment of the present invention.

## BEST IMPLEMENTATIONS OF THE INVENTION

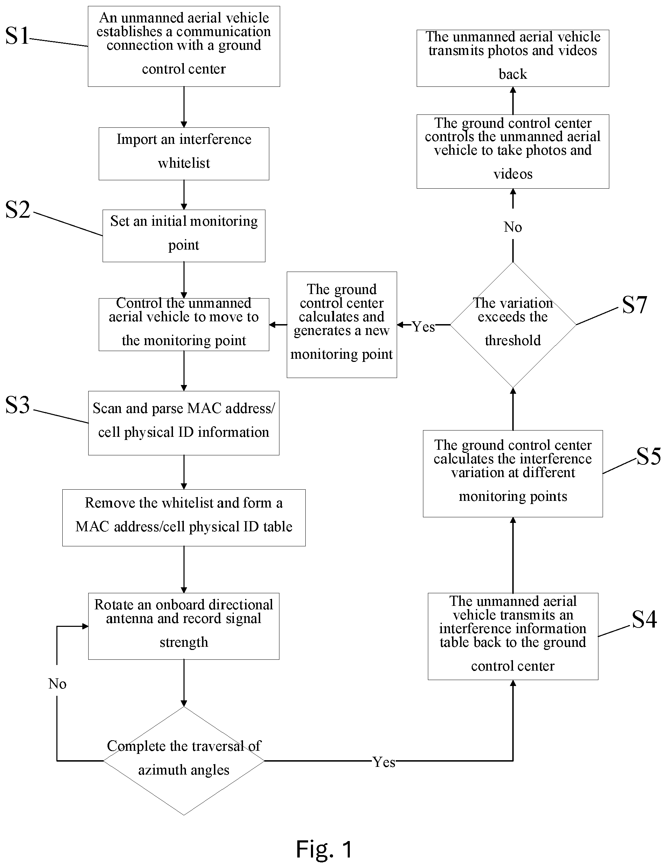

An unmanned aerial vehicle interference source positioning method and system based on interference vectors and physical characteristics provided by the present invention will be further described in detail below in conjunction with the accompanying drawings FIGs. 1 to 2 and the specific embodiments. The advantages and features of the present invention will become clearer from the following description. It should be noted that the drawings are in a very simplified form and all use imprecise scales, which are only used to facilitate and clearly assist the purpose of illustrating the embodiments of the present invention. In order to make the objectives, features and advantages of the present invention more comprehensible, please refer to the accompanying drawings. It should be noted that the structures, proportions, sizes, etc. shown in the drawings attached to the present invention are only used to match the content disclosed in the specification, for those who are familiar with this technology to understand and read, and are not used to limit the limiting conditions implemented by the present invention, so it has no technical substantive meaning, and any modification of structure, change of proportional relationship or adjustment of size shall still fall within the scope covered by the disclosed technical content of the present invention without affecting the effect and purpose of the present invention.

Due to the large distribution area of various wireless communication interference sources, the interference sources cannot be precisely positioned in the prior art, making it impossible to eliminate potential safety hazards.

In one aspect, referring to FIG. 1, the embodiments of the present invention provide an unmanned aerial vehicle interference source positioning method based on interference vectors and physical characteristics, including:

Step S1. Establishing a communication connection between an unmanned aerial vehicle and a ground control center.

Step S1.1. Transmitting, by the ground control center, physical addresses of an interference whitelist to the unmanned aerial vehicle.

Step S2. Defining, by the ground control center, a monitoring point, specifically including: setting, by the ground control center, one point with stronger interference during daily operations as an initial monitoring point S1 and controlling the unmanned aerial vehicle to fly to the predetermined monitoring point S1.

Step S3. After the unmanned aerial vehicle arrives at the predetermined monitoring point S1, scanning and parsing MAC addresses/cell physical ID information from wireless APs/base stations, removing interference MAC addresses/cell physical IDs in the whitelist, and then forming MAC address/cell physical ID tables $(MAC1_{S1}, MAC2_{S1}, MAC3_{S1}, MAC4_{S1}, MAC5_{S1})$;

rotating a horizontal turntable and a vertical turntable for an onboard antenna of the unmanned aerial vehicle to predetermined angles, respectively, recording the horizontal intensity and the vertical intensity of the interference sources corresponding to each physical address in the physical address table, and repeating the rotation of the horizontal turntable and the vertical turntable to next predetermined angles until the traversal of different horizontal angles and vertical angles is completed.

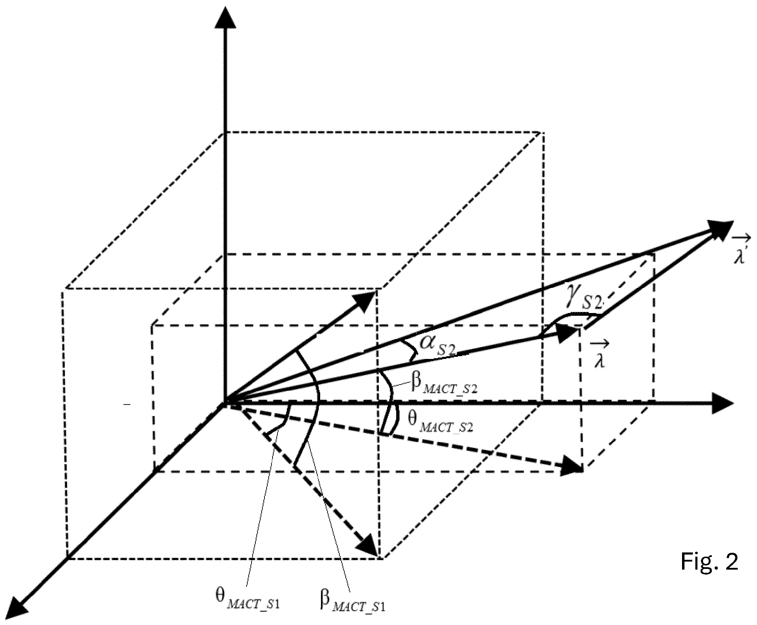

In this embodiment, step S3 specifically includes: referring to FIG. 2, rotating the horizontal turntable and the vertical turntables for the onboard directional antenna, initially rotating by a certain angle each time, maintaining the position for a period to measure the average signal strength of the corresponding MAC addresses/cell physical IDs, then rotating again until a full rotation is completed, recording an array of measured strengths corresponding to each MAC address/cell physical ID and respective azimuth angles and GNSS information ($X_{S1}$ $Y_{S1}$ $Z_{S1}$) of the GNSS of the unmanned aerial vehicle , and transmitting acquired information to the ground control center.

Step S4. Receiving, by the ground control center, the information transmitted by the unmanned aerial vehicle, and forming an interference signal MAC address/cell physical ID table at the initial monitoring point S1 ($MAC1_{S1}$, $MAC2_{S1}$, $MAC3_{S1}$, $MAC4_{S1}$, $MAC5_{S1}$), along with respective maximum horizontal interference directions ($\theta_{MAC1\_S1}$, $\theta_{MAC2\_S1}$, $\theta_{MAC3\_S1}$, $\theta_{MAC4\_S1}$, $\theta_{MAC5\_S1}$, maximum vertical interference directions ($\beta_{MAC1\_S1}$, $\beta_{MAC2\_S1}$, $\beta_{MAC3\_S1}$, $\beta_{MAC4\_S1}$, $\beta_{MAC5\_S1}$) and interference power ($I_{MAC1\_S1}$, $I_{MAV2\_S1}$, $I_{MAC3\_S1}$, $I_{MAC4\_S1}$, $I_{MAC5\_S1}$).

Step S5. Establishing a vector positioning model, controlling, by the ground control center, the unmanned aerial vehicle to fly to a next initial monitoring point S2, after repeating steps S3-S4, receiving, by the ground control center, information transmitted by the unmanned aerial vehicle, forming an interference signal MAC address/cell physical ID table at the initial monitoring point S2 ( $MAC1'_{S2}$, $MAC2'_{S2}$, $MAC3'_{S2}$, $MAC4'_{S2}$, $MAC5'_{S2}$ ), along with maximum horizontal interference directions ($\theta_{MAC1'\_S2}$, $\theta_{MAC2'\_S2}$, $\theta_{MAC3'\_S2}$, $\theta_{MAC4'\_S2}$, $\theta_{MAC5'\_S2}$), maximum vertical interference directions ($\beta_{MAC1'\_S2}$, $\beta_{MAC2'\_S2}$, $\beta_{MAC3'\_S2}$, $\beta_{MAC4'\_S2}$, $\beta_{MAC5'\_S2}$), interference power ($I_{MAC1'\_S2}$, $I_{MAC2'\_S2}$, $I_{MAC3'\_S2}$, $I_{MAC4'\_S2}$, $I_{MAC5'\_S2}$) and GNSS information ($X_{S2}$ $Y_{S2}$ $Z_{S2}$ ) of the unmanned aerial vehicle.

Step S6. Analyzing, by the ground control center, interference data at the initial monitoring point S1 and interference data at the initial monitoring point S2, and based on the interference power, determining interference sources MACT that need further tracking and positioning, and interference directions and interference power thereof at corresponding positions ($\theta_{MACT\_S1}$, $\theta_{MACT\_S2}$, $\beta_{MACT\_S1}$, $\beta_{MACT\_S2}$, $I_{MACT\_S1}$, $I_{MACT\_S2}$).

Step S7. Based on the vector positioning model, calculating the variation in the physical characteristics of the interference sources at different monitoring points, when the variation exceeds a predetermined threshold, calculating and generating, by the ground control center, a new monitoring point, controlling the unmanned aerial vehicle to fly to the new monitoring point, and re-recording the physical characteristics of the interference sources at the new monitoring point;

receiving, by the ground control center, relevant data, where the variation is denoted as ΔI, and the predetermined threshold is denoted as $\varepsilon$; when $\Delta I = \left\| \dfrac{I_{MACT\_S2} - I_{MACT\_S1}}{I_{MACT\_S1}} \right\| \geq \varepsilon$ , by means of $\theta_{MACT\_S1}$, $\theta_{MACT\_S2}$, $\beta_{MACT\_S1}$ and $\beta_{MACT\_S2}$, calculating included angles $\alpha_{S2}$ and $\gamma_{S2}$ shown in FIG. 2, performing normalized vectorization on ($X_{S1}$ $Y_{S1}$ $Z_{S1}$) and ($X_{S2}$ $Y_{S2}$ $Z_{S2}$) to obtain $\vec{\lambda}$, and based on $\alpha_{S2}$ and $\gamma_{S2}$, calculating the position of a next monitoring point S3 as :

$$\vec{\lambda}' = \frac{\sin(\alpha_{S2})}{\sin(\pi - \alpha_{S2} - \gamma_{S2})} * \vec{\lambda} \qquad (1)$$

when the variation does not exceed the predetermined threshold, controlling, by the ground control center, the unmanned aerial vehicle to take photos and videos to obtain corresponding photos and videos;

transmitting, by the unmanned aerial vehicle, the photos and the videos to the ground control center to complete the positioning of the actual positions of the interference sources.

In another aspect, the embodiments of the present invention further provide an unmanned aerial vehicle interference source positioning system based on interference vectors and physical characteristics, comprising a ground portion and an unmanned aerial vehicle onboard portion;

the ground portion is in communication connection with the unmanned aerial vehicle onboard portion, and the ground portion and the unmanned aerial vehicle onboard portion perform the unmanned aerial vehicle interference source positioning method based on interference vectors and physical characteristics to determine the actual positions of the interference sources.

The ground portion is a ground control center, which controls the flight of the unmanned aerial vehicle onboard

**EP 4 607 972 A1**

portion, acquires data transmitted by the unmanned aerial vehicle onboard portion and processes the data transmitted by the unmanned aerial vehicle onboard portion.

The unmanned aerial vehicle onboard portion acquires interference information from the interference sources and transmits the interference information to the ground control center.

In summary, the present embodiment proposes an unmanned aerial vehicle interference source positioning method and system based on interference vectors and physical characteristics. The vector positioning model is used to complete precise positioning of the interference sources; MAC addresses/cell physical IDs are used as identification items, with six-byte/four-byte hexadecimal numbering, avoiding issues such as duplicate numbering or unrecognized identification items that may arise from using other identification items like PCI numbers, SSID numbers, or other identification items; relevant calculations are performed by a ground system, reducing the computational load of a flight control system of the unmanned aerial vehicle; the introduction of the whitelist reduces ineffective calculations during the interference troubleshooting process; and after the positioning of the interference sources is completed, in addition to using the GNSS for positioning, photos of the interference sources and videos of the environments around the interference sources are used, reducing the difficulty of later on-site processing of interference source positioning.

It should be noted that in this specification, relational terms such as "first", "second" and the like are only used to distinguish one entity or operation from another entity or operation, and do not necessarily require or imply any actual relationship or sequence between these entities or operations. Furthermore, the terms "comprises", "includes" or any other variant thereof are intended to cover non-exclusive inclusion, so that a process, method, object or equipment including a series of elements not only includes those elements, but also includes other elements not explicitly listed, or also includes elements inherent to such process, method, object or equipment. Without further limitations, an element defined by the phrase "comprising a..." does not exclude the presence of additional identical elements in the process, method, object or equipment including the element.

Although the content of the present invention has been described in detail through the above-preferred embodiments, it should be understood that the above description should not be considered limitation to the present invention. Various modifications and alternatives to the present invention will become apparent to those skilled in the art upon reading the foregoing disclosure. Accordingly, the scope of protection of the present invention shall be limited by the appended claims.

## Claims

1. An unmanned aerial vehicle interference source positioning method based on interference vectors and physical characteristics, comprising:
   acquiring, by a ground control center, physical characteristics of interference sources that are collected by an unmanned aerial vehicle; performing several positioning operations on the interference sources based on the physical characteristics of the interference sources; and establishing a vector positioning model to determine actual positions of the interference sources.

2. The unmanned aerial vehicle interference source positioning method based on interference vectors and physical characteristics according to claim 1, wherein the acquiring physical characteristics of interference sources that are collected by an unmanned aerial vehicle specifically comprises: establishing a communication connection between the unmanned aerial vehicle and the ground control center; and acquiring, by the ground control center, the physical characteristics of the interference sources that are collected by the unmanned aerial vehicle, and controlling the flight of the unmanned aerial vehicle.

3. The unmanned aerial vehicle interference source positioning method based on interference vectors and physical characteristics according to claim 2, wherein the acquiring, by the ground control center, the physical characteristics of the interference sources that are collected by the unmanned aerial vehicle and controlling the flight of the unmanned aerial vehicle specifically comprises:

   transmitting, by the ground control center, physical addresses of an interference whitelist to the unmanned aerial vehicle;
   defining, by the ground control center, a monitoring point;
   controlling, by the ground control center, the unmanned aerial vehicle to fly to the monitoring point; and
   after the unmanned aerial vehicle arrives at the monitoring point, scanning and parsing physical addresses of wireless access points to obtain parsed physical addresses of the wireless access points, and removing the physical addresses of the interference whitelist from the parsed physical addresses of the wireless access points to obtain a physical address table.

7

4. The unmanned aerial vehicle interference source positioning method based on interference vectors and physical characteristics according to claim 3, wherein the acquiring, by the ground control center, the physical characteristics of the interference sources that are collected by the unmanned aerial vehicle further comprises:
obtaining the physical characteristics of the interference sources based on the physical address table, and transmitting, by the unmanned aerial vehicle, the physical characteristics of the interference sources to the ground control center.

5. The unmanned aerial vehicle interference source positioning method based on interference vectors and physical characteristics according to claim 4, wherein the obtaining the physical characteristics of the interference sources based on the physical address table specifically comprises:
rotating a horizontal turntable and a vertical turntable for an onboard antenna of the unmanned aerial vehicle to predetermined angles, respectively, recording the horizontal intensity and the vertical intensity of the interference sources corresponding to each physical address in the physical address table, and repeating the rotation of the horizontal turntable and the vertical turntable to next predetermined angles until the traversal of different horizontal angles and vertical angles is completed.

6. The unmanned aerial vehicle interference source positioning method based on interference vectors and physical characteristics according to claim 5, wherein the unmanned aerial vehicle transmits the recorded horizontal intensity and vertical intensity of the interference sources and positioning information from a global navigation satellite system (GNSS) of the unmanned aerial vehicle to the ground control center.

7. The unmanned aerial vehicle interference source positioning method based on interference vectors and physical characteristics according to claim 6, wherein the performing several positioning operations on the interference sources specifically comprises:
defining, by the ground control center, several different monitoring points, controlling, by the ground control center, the unmanned aerial vehicle to fly to different monitoring points, and recording, by the unmanned aerial vehicle, the physical characteristics of the interference sources at each monitoring point.

8. The unmanned aerial vehicle interference source positioning method based on interference vectors and physical characteristics according to claim 7, wherein the performing several positioning operations on the interference sources and establishing a vector positioning model further specifically comprises: establishing, by the ground control center, a vector positioning model, calculating the variation in the physical characteristics of the interference sources at different monitoring points based on the vector positioning model, and determining the magnitudes of the variation relative to a predetermined threshold.

9. The unmanned aerial vehicle interference source positioning method based on interference vectors and physical characteristics according to claim 8, wherein the determining the magnitudes of the variation relative to a predetermined threshold specifically comprises: when the variation exceeds the predetermined threshold, calculating and generating, by the ground control center, a new monitoring point, controlling the unmanned aerial vehicle to fly to the new monitoring point, and re-recording the physical characteristics of the interference sources at the new monitoring point; and when the variation does not exceed the predetermined threshold, controlling, by the ground control center, the unmanned aerial vehicle to take photos and videos to obtain corresponding photos and videos.

10. The unmanned aerial vehicle interference source positioning method based on interference vectors and physical characteristics according to claim 9, further comprising: transmitting, by the unmanned aerial vehicle, the photos and the videos to the ground control center to complete the positioning of the actual positions of the interference sources.

11. An unmanned aerial vehicle interference source positioning system based on interference vectors and physical characteristics, comprising a ground portion and an unmanned aerial vehicle onboard portion,
wherein the ground portion is in communication connection with the unmanned aerial vehicle onboard portion, and the ground portion and the unmanned aerial vehicle onboard portion perform the unmanned aerial vehicle interference source positioning method based on interference vectors and physical characteristics according to any one of claims 1 to 10 to determine the actual positions of the interference sources.

12. The unmanned aerial vehicle interference source positioning system based on interference vectors and physical characteristics according to claim 11, wherein the ground portion is a ground control center, controls the flight of the unmanned aerial vehicle onboard portion, acquires data transmitted by the unmanned aerial vehicle onboard portion and processes the data transmitted by the unmanned aerial vehicle onboard portion.

**13.** The unmanned aerial vehicle interference source positioning system based on interference vectors and physical characteristics according to claim 12, wherein the unmanned aerial vehicle onboard portion acquires interference information from the interference sources and transmits the interference information to the ground control center.

S1 — An unmanned aerial vehicle establishes a communication connection with a ground control center

↓

Import an interference whitelist

↓

S2 — Set an initial monitoring point

↓

Control the unmanned aerial vehicle to move to the monitoring point

↓

S3 — Scan and parse MAC address/ cell physical ID information

↓

Remove the whitelist and form a MAC address/cell physical ID table

↓

Rotate an onboard directional antenna and record signal strength

↓

Complete the traversal of azimuth angles

No → (back to Rotate an onboard directional antenna and record signal strength)

Yes →

S4 — The unmanned aerial vehicle transmits an interference information table back to the ground control center

↑

S5 — The ground control center calculates the interference variation at different monitoring points

↑

S7 — The variation exceeds the threshold

Yes → The ground control center calculates and generates a new monitoring point → (back to Control the unmanned aerial vehicle to move to the monitoring point)

No ↑

The ground control center controls the unmanned aerial vehicle to take photos and videos

↑

The unmanned aerial vehicle transmits photos and videos back

Fig. 1

Fig. 2

## INTERNATIONAL SEARCH REPORT

| International application No. |
| --- |
| **PCT/CN2023/135428** |

| A. | CLASSIFICATION OF SUBJECT MATTER |
| --- | --- |

H04W4/029(2018.01)i

According to International Patent Classification (IPC) or to both national classification and IPC

| B. | FIELDS SEARCHED |
| --- | --- |

Minimum documentation searched (classification system followed by classification symbols)

IPC: H04W,H04L,H04Q

Documentation searched other than minimum documentation to the extent that such documents are included in the fields searched

Electronic data base consulted during the international search (name of data base and, where practicable, search terms used)

CNABS, CNTXT, CNKI, WPABS, WPABSC, ENTXT, VEN, IEEE, 3GPP: 干扰, 矢量, 物理, 特征, 无人机, 源, 定位, 位置, 飞行, 白名单, 强度, interference, vector, physical, character, UAV, source, locate, location, flight, white list, strength

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116634374 A (CASCO SIGNAL LTD.) 22 August 2023 (2023-08-22) entire document | 1-13 |
| X | CN 109314868 A (SHENZHEN DAJIANG INNOVATION TECHNOLOGY CO., LTD.; ZHONGRUI COMMUNICATION PLANNING AND DESIGN CO., LTD.) 05 February 2019 (2019-02-05) description, paragraphs 22-75 | 1-2 |
| A | CN 114142954 A (SHANGHAI JIAO TONG UNIVERSITY) 04 March 2022 (2022-03-04) entire document | 1-13 |
| A | CN 115529073 A (BEIJING UNIVERSITY OF POSTS AND TELECOMMUNICATIONS) 27 December 2022 (2022-12-27) entire document | 1-13 |
| A | KR 20190068861 A (ELECTRONICS AND TELECOMMUNICATIONS RESEARCH INSTITUTE) 19 June 2019 (2019-06-19) entire document | 1-13 |
| A | US 2014099901 A1 (FRAUNHOFER GES FORSCHUNG) 10 April 2014 (2014-04-10) entire document | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 December 2023** | **08 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/135428**

| Patent document cited in search report | | | Publication date (day/month/year) | Patent family member(s) | | | Publication date (day/month/year) |
|---|---|---|---|---|---|---|---|
| CN | 116634374 | A | 22 August 2023 | None | | | |
| CN | 109314868 | A | 05 February 2019 | WO | 2019079959 | A1 | 02 May 2019 |
| CN | 114142954 | A | 04 March 2022 | None | | | |
| CN | 115529073 | A | 27 December 2022 | None | | | |
| KR | 20190068861 | A | 19 June 2019 | None | | | |
| US | 2014099901 | A1 | 10 April 2014 | EP | 2717481 | A2 | 09 April 2014 |
| | | | | EP | 2717481 | A3 | 26 July 2017 |
| | | | | EP | 2717481 | B1 | 03 October 2018 |
| | | | | US | 9351175 | B2 | 24 May 2016 |

Form PCT/ISA/210 (patent family annex) (July 2022)